# EUROPEAN PATENT APPLICATION

(11) **EP 2 180 496 A1**
(43) Date of publication of application: **28.04.2010**
(21) Application number: 09722634.4
(22) Date of filing: 17.03.2009
(51) Int. Cl.: H01J 11/02, H01J 9/02, H01J 9/26

(54) **PLASMA DISPLAY PANEL AND METHOD FOR MANUFACTURING THE SAME**

(30) Priority: 18.03.2008 JP 2008069027
(71) Applicant: Panasonic Corporation, Kadoma-shi Osaka 571-8501 (JP)
(72) Inventor: AKIYAMA, Koji, Osaka-shi, Osaka 540-6207 (JP); NISHINAKA, Masaki, Osaka-shi, Osaka 540-6207 (JP); AOTO, Koji, Osaka-shi, Osaka 540-6207 (JP)
(74) Representative: Kügele, Bernhard
(86) International application number: PCT/JP2009/001168
(87) International publication number: WO 2009/116263

(57) **Abstract**

The invention is plasma display panel (1) with a plurality of pairs of display electrodes (6) and dielectric layers (8) disposed on front glass substrate (3), and it is intended to realize plasma display panel (1), wherein the stress at a surface where dielectric layer (8) of front glass substrate (3) is not disposed is a compressive stress ranging from 0.8MPa to 2.4MPa, the glass substrate is sufficient in strength, and the panel is almost free from breakage.

## Description

### TECHNICAL FIELD

The present invention relates to a plasma display panel used for a display device, and its method for manufacturing.

### BACKGROUND ART

As it is possible to realize a plasma display panel (hereinafter called PDP) which is enhanced in accuracy, reduced in thickness, and increased in screen size, products such as 100-inch class televisions and the like are already available. Recently, PDP is increasingly applied to high definition televisions of which the number of scanning lines is two times or over as compared with a conventional NTSC system.

PDP is basically formed of a front plate and a rear plate. The front plate comprises a glass substrate that is sodium borosilicate glass manufactured by float method, a display electrode formed of striped transparent electrode and bus electrode which are formed on one main surface thereof, a dielectric layer which covers the display electrode and functions as a capacitor, and a protective layer formed from magnesium oxide (MgO) formed on the dielectric layer.

On the other hand, the rear plate comprises a glass substrate, a striped address electrode formed on one main surface thereof, a Primary dielectric layer which covers the address electrode, a barrier rib formed on the Primary dielectric layer, and a phosphor layer emitting red, green and blue lights formed between the barrier ribs.

The front plate and rear plate are hermetically sealed with their electrode formed surfaces opposed to each other, and neon (Ne) - Xenon (Xe) discharge gas is sealed in the discharge space partitioned by the barrier ribs with a pressure of 55kPa to 80kPa. PDP selectively applies image signal voltage to the display electrode for the purpose of discharge and realizes color image display, emitting red, green and blue lights, as each color phosphor layer is excited by ultraviolet ray generated due to the discharge.

In such a plasma display device, the panel using glass as main material is held at the front side of a chassis member made of metal such as aluminum, and a circuit board forming a driving circuit for emission of light from the panel is arranged at the rear side of the chassis member, thereby configuring the module disclosed as an example (e.g. refer to Patent document 1).

In the case of a flat panel display such as PDP, it is required to be thin and light-weight, having a large screen. Therefore, in the prior art, there arises such problem that the glass substrate used as a substrate is insufficient in strength, and panel breakage occurs in the strength test of products.
Patent document 1 Unexamined Japanese Patent Publication 2003-131580

### SUMMARY OF THE INVENTION

The PDP of the present invention is a PDP with a plurality of pairs of display electrodes and dielectric layers disposed on a front glass substrate, wherein the stress at the opposite side of a surface where the dielectric layer of the front glass substrate is disposed is a compressive stress ranging from 0.8MPa to 2.4MPa.

Also, the PDP manufacturing method of the present invention is a PDP manufacturing method in which a front glass substrate formed with display electrodes and dielectric layers at least and a rear glass substrate are arranged opposite each other, wherein the front glass substrate is processed at a heat treatment temperature lower by 100°C or over as compared with the strain point temperature of the front glass substrate in any of the steps, a step of forming display electrodes, a step of forming dielectric layers, and a step of arranging a front glass substrate and a rear glass substrate opposite each other.

According to the present invention, it is possible to maintain the strength of the glass substrates and to provide a PDP which is almost free from panel breakage.

### BRIEF DESCRIPTION OF DRAWINGS

Fig. 1 is a perspective view showing the structure of PDP in the preferred embodiment of the present invention.
Fig. 2 is a sectional view showing the structure of a front plate of the PDP.
Fig. 3 is an explanatory diagram showing a stress generated in the cross-section of a glass substrate.

### DESCRIPTION OF REFERENCE MARKS

- 1: PDP
- 2: Front plate
- 3: Front glass substrate
- 4: Scan electrode
- 4a, 5a: Transparent electrode
- 4b, 5b: Metal bus electrode
- 5: Sustain electrode
- 6: Display electrode
- 7: Black stripe (shielding layer)
- 8: Dielectric layer
- 9: Protective layer
- 10: Rear plate
- 11: Rear glass substrate
- 12: Address electrode
- 13: Primary dielectric layer
- 14: Barrier rib
- 15: Phosphor layer
- 16: Discharge space
- 20: Compressive stress layer
- 21: Compressive stress
- 30: Tensile stress layer
- 31: Tensile stress

### DETAILED DESCRIPTION OF PREFERRED EMBODIMENTS

The PDP in the preferred embodiment of the present invention will be described in the following with reference to the drawings.

### Preferred Embodiment

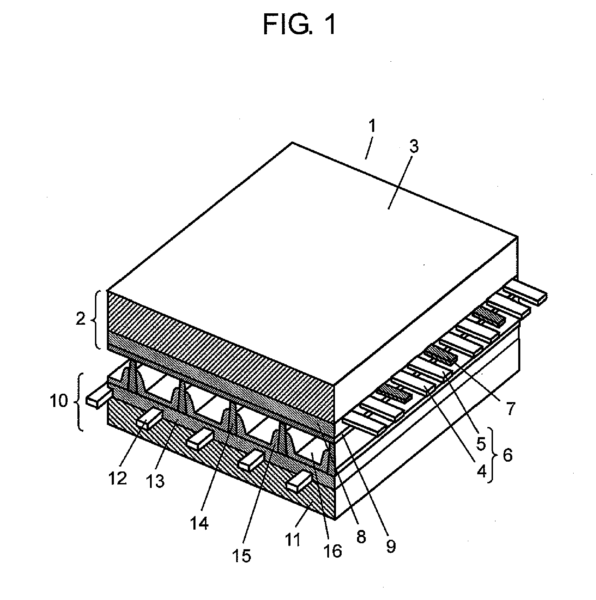

Fig. 1 is a perspective view showing the structure of PDP in the preferred embodiment of the present invention. The basic structure of the PDP is same as that of a common AC surface discharge type PDP. As shown in Fig. 1, PDP1 is configured in that front plate 2 formed of front glass substrate 3 or the like and rear plate 10 formed of rear glass substrate 11 or the like are arranged opposite each other, and its outer periphery is hermetically sealed by a sealing material such as glass frit. Discharge space 16 in PDP1 sealed is filled with discharge gas such as neon (Ne) and xenon (Xe) with a pressure ranging from 55kPa to 80kPa.

A pair of belt shaped display electrodes 6, formed of scan electrode 4 and sustain electrode 5, and black stripe (shielding layer) 7 are arranged in parallel to each other in a plurality of rows on front glass substrate 3 of front plate 2. Dielectric layer 8 which functions as capacitor is formed on front glass substrate 3 in such manner as to cover display electrode 6 and shielding layer 7, and further, protective layer 9 formed from magnesium oxide (MgO) or the like is formed on the surface thereof.

Also, on rear glass substrate 11 of rear plate 10, a plurality of belt shaped address electrodes 12 are arranged in parallel to each other in a direction perpendicular to scan electrode 4 and sustain electrode 5 of front plate 2, which is covered by Primary dielectric layer 13. Further, barrier rib 14 with a specified height for partitioning discharge space 16 is formed on primary dielectric layer 13 between address electrodes 12. Phosphor layers 15 for emission of light in red, green and blue by ultraviolet ray are sequentially applied and formed in groove between barrier ribs 14 for each address electrode 12. Discharge cell is formed in the position where scan electrode 4 and sustain electrode 5 cross address electrode 12, and the discharge cell having red, green and blue phosphor layers 15 arranged in the direction of display electrode 6 corresponds to pixel for color display.

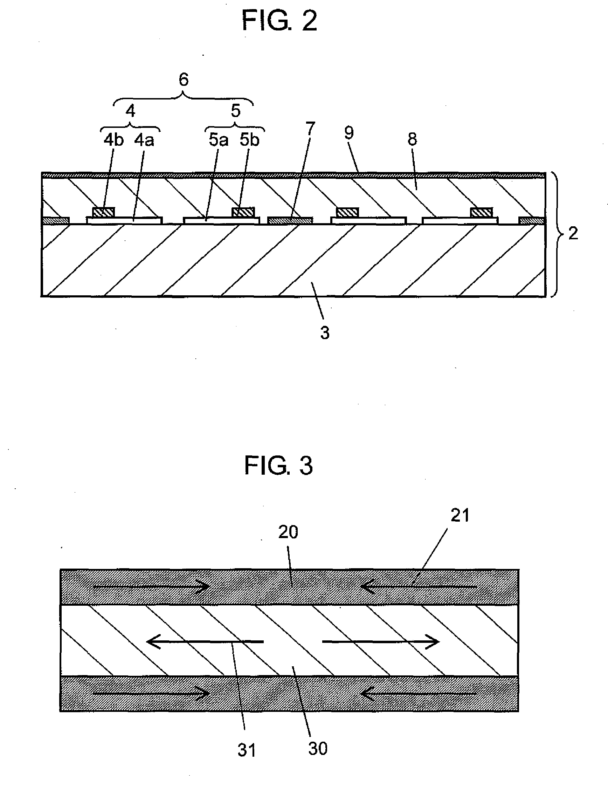

Fig. 2 is a sectional view of front plate 2 of PDP in the preferred embodiment of the present invention. Fig. 2 is a vertically reversed view of Fig. 1. As shown in Fig. 2, display electrode 6 formed of scan electrode 4 and sustain electrode 5, and black stripe 7 are formed in a pattern on front glass substrate 3 manufactured by float method or the like. Scan electrode 4 and sustain electrode 5 are respectively formed of transparent electrodes 4a, 5a made of indium oxide (ITO) or tin oxide (SnO₂), and metal bus electrodes 4b, 5b formed on transparent electrodes 4a, 5a. Metal bus electrodes 4b, 5b are used for the purpose of giving conductivity in the lengthwise direction of transparent electrodes 4a, 5a, and are formed from a conductive material based on silver (Ag).

Dielectric layer 8 is disposed in such manner as to cover transparent electrodes 4a, 5a, metal bus electrodes 4b, 5b, and black stripe 7 which are formed on front glass substrate 3. And protective layer 9 is formed on dielectric layer 8.

The strength of the glass substrate of PDP is described in the following.

As described above, PDP is increased in screen size and enhanced in fineness as well as accuracy, and at the same time, it is required to be reduced in weight and thickness. Accordingly, to maintain the strength of PDP as a product at the present level, it is necessary to further increase the strength of front glass substrate 3 and rear glass substrate 11.

Also, in packaging of a PDP product before delivery, cushioning material is generally disposed only on the peripheral area of PDP, and it is not disposed in the image display position. Therefore, if shocks are given to the product dropped with the front glass substrate 3 down during transportation, then forces including the entire weight of the product will be applied to front glass substrate 3, causing front glass substrate 3 to concavely bend and the panel to break.

On the other hand, in case the product is dropped with the rear glass substrate 11, the opposite side of the display surface down, then the probability of causing rear glass substrate 11 to break or the panel to break will become less because a reinforcing plate also serving for heat dissipation and mounted with a driving circuit board is attached to rear glass substrate 11 to be positioned down. Also, in that case, front glass substrate 3 will be concaved, and panel breakage will be harder to take place as compared with the case of convexly deforming thereof. That is, as to impact caused by dropping or the like, the state of the image display side of front glass substrate 3 is closely related to panel breakage.

Incidentally, the glass substrate of PDP is generally formed by float method. In the float method, the glass material mixed is melted and degassed in a melting tank at about 1600°C, and then it is set afloat and drawn in a float bath with molten tin. In this way, the material is formed into a flat plate having the desired width and thickness. After that, the glass formed into a plate is quenched from about 600°C to about 200°C. As a result, there may remain strain and stress in the uppermost surface of the glass substrate.

Fig. 3 is a schematic diagram showing stresses produced in a glass substrate formed by float method, which is a cross-sectional view of the glass substrate. As shown in Fig. 3, compressive stress layer 20 in which compressive stress 21 is produced as a residual stress is formed at the surface of the glass substrate in its cross sectional direction, and also formed in the inside thereof is tensile stress layer 30 in which tensile stress 31 is produced as a residual stress. However, compressive stress layer 20 and tensile stress layer 30 exist in a balanced state, maintaining the form of a flat plate as the shape of the glass substrate.

On the other hand, as described above, when shocks are given to the product during transportation with the front glass substrate 3 down, for example, external forces that may convexly bend the image display surface will be applied thereto. Accordingly, a glass substrate formed by float method is in a state of keeping compressive stresses remaining in the uppermost surface of the substrate, which is therefore strong against such impact caused due to external forces.

The inventor et al have found that such a glass substrate changes in strength through the manufacturing process of PDP. Specifically, the residual stress of front glass substrate 3 measured after the steps of forming display electrode, forming dielectric layer, forming protective layer, and sealing/exhausting is greatly reduced through each of these steps.

This is because there are influences of heat processes such as display electrode and dielectric layer firing process, and further, sealing/exhausting process. That is, in these heat processes, the temperature of the glass substrate is increased from about 400°C to 550°C, and thereafter, the temperature is decreased to about the room temperature. Since the entire glass substrate is slowly cooled in the course of temperature decrease, it can be considered that the residual compressive stress generated in the glass substrate is reduced. And it can be considered that the repeated increase and decrease in temperature of the glass substrate causes the remaining compressive stress to be further reduced.

Also, in addition to the decrease of compressive stress, in the production process of PDP1, flaw (micro-crack) is liable to be generated in the glass substrate surface due to contact with a setter used in the firing process or contact with a conveyor roller between the processes. Due to the generation of such flaw, the glass substrate is further decreased in strength.

Consequently, in front glass substrate 3 of PDP1 manufactured by the prior art, as the remaining compressive stress is reduced, flexing is further liable to take place such that the image display surface convexly bends due to shocks given during the transportation, causing panel breakage to be easily generated. A similar tendency has been confirmed from the result of strength tests such as product package drop tests.

On the other hand, in the preferred embodiment of the present invention, residual stress is allowed to exist in a certain range of the surface of front glass substrate 3, thereby realizing PDP1 wherein panel breakage is hardly caused due to impact.

Also, the inventor et al have found that the residual stress value necessary against the impact greatly varies with the thickness and glass composition of the substrate. Particularly, when a glass substrate formed from components containing no lead is employed, even in case of same residual stress as in the prior art, the strength in drop test is greatly decreased, and it becomes difficult to maintain the substrate strength the same as before and to ensure the productivity at the factory. From the result, in the preferred embodiment of the present invention, residual stresses of the substrate are within the following range in accordance with the types of front glass substrate 3 of PDP1.

The stress at the opposite side of a surface where dielectric layer 8 of front glass substrate 3 is disposed is a compressive stress ranging from 0.8MPa to 2.4MPa. Particularly, when the thickness of front glass substrate is 2.8mm ±0.5mm, the compressive stress is desirable to range from 1.3MPa to 2.4MPa. Also, when the thickness of front glass substrate is 1.8mm ±0.5mm, the compressive stress is desirable to range from 0.8MPa to 1.7MPa.

On the other hand, in the case of a glass substrate in the initial state, not processed through the process of manufacturing PDP, which is formed by float method, the residual stress ranges from 1.3MPa to 2.4MPa when the substrate thickness is 2.8mm ±0.5mm, and the residual stress ranges from 0.8MPa to 1.7MPa when the substrate thickness is 1.8mm ±0.5mm.

Accordingly, as a result of investigation by the inventor et al, by maintaining the residual stress in the initial state, it is possible to obtain satisfactory results without panel breakage in the product package drop test. Thus, it is possible to manufacture PDP which is almost free from glass breakage against shocks given during transportation and to maintain the substrate strength, and also to ensure the productivity.

In the preferred embodiment of the present invention, residual stress in the glass substrate is measured by measuring the phase angle of polarized transmitted light. Polarimeter (SP-II type of Sinko Seiki Co., Ltd.) is used as the measuring instrument. The stress measuring instrument has on the principle such characteristic that the visible color of polarized transmitted light is different between compressive stress and tensile stress, and therefore, it is possible to determine whether it is compressive stress or tensile stress.

Also, residual stress is measured with respect to the image display surface of front glass substrate 3, that is, the surface where dielectric layer or the like is not formed. This is because of taking into account the fact that panel breakage due to shocks given when the product package is dropped as described above starts from the image display surface side. Also, the measured value at the portion is clearly related to the result of the product package drop test mentioned later.

The PDP manufacturing method in the preferred embodiment of the present invention will be described in the following.

As described above, in the prior art, the stress generated in the glass substrate varies with heat processes such as a firing process and drying process in forming each member of PDP1. Therefore, in the preferred embodiment of the present invention, each component element of PDP is formed by a heat process at a lower temperature than in the conventional manufacturing method in order to keep the residual stress of the glass substrate within a specific range.

As a result of investigation by the inventor et al, it has been found that it is necessary to manufacture PDP1 in the range of temperatures from the strain point temperature of the glass substrate to a temperature lower by 100°C or over in order to keep the residual stress to the glass substrate within the above-mentioned range. That is, in case front glass substrate 3 is subjected to a heat process exceeding the temperature, the compressive stress remaining in the glass substrate in the initial state will be reduced, going out of the above-mentioned range of residual stress. As a result, it has been found that glass breakage easily takes place due to impact given during the transportation.

In the preferred embodiment of the present invention, PD200 and soda lime glass AS of Asahi Glass Co., Ltd. are employed as front glass substrate 3. In the case of PD200, because the strain point is about 570°C, PDP1 is manufactured by a heat process in which the surface temperature of front glass substrate 3 is in a range of temperature lower than 470°C. On the other hand, in the case of soda lime glass AS, because the strain point is about 510°C, PDP1 is manufactured by a heat process in which the surface temperature of front glass substrate 3 is in a range of temperature lower than 410°C. In this way, PDP1 can be manufactured with the residual stress kept in the initial state at the surface of front glass substrate 3 as maintained in the manufacture of the glass substrate by float method.

The PDP manufacturing method in the preferred embodiment of the present invention will be described in detail in the following. The above-mentioned soda lime glass AS is used as front glass substrate 3, and a method of manufacturing PDP1 by a heat process in which the temperature of front glass substrate 3 is in a range of temperature lower than 410°C is described in the following. It is also possible to obtain the same effect of the present invention by a manufacturing method in which the temperature of front glass substrate 3 is in a range of temperature lower than 470°C with use of PD200 as front glass substrate 3.

Also, in the preferred embodiment of the present invention, when the temperature of front glass substrate 3 is measured, K type thermocouple to be contacted on the glass substrate surface is employed taking into account the measurement at high temperatures. In this case, the measurement error is about ±5°C.

Firstly, scan electrode 4 and sustain electrode 5 and shielding layer 7 are formed on front glass substrate 3 in the initial state. Transparent electrodes 4a, 5a are formed by using a thin film process such as sputtering method, which is followed by patterning to a desired shape by a photolithography method.

The method of forming metal bus electrodes 4b, 5b is described in detail in the following. In the prior art, a paste containing a photosensitive component, glass component, and conductive component is applied by using a screen printing method, and after patterning by a photolithography method or the like, a method of firing at 560°c to 600°C is generally employed for the purpose of vitrifying the glass component contained for maintaining the shape. However, by using such a method, the effect of the present invention cannot be obtained because the compressive stress remaining in the glass substrate is reduced as described above.

Accordingly, in the preferred embodiment of the present invention, the following manufacturing method is employed so that the firing temperature in the above-mentioned firing process is lower by 100°C as compared with the strain point temperature of the glass substrate.

That is, a metal paste for fine wiring is used as the material for forming metal bus electrodes 4b, 5b. The paste is prepared by using a dispersing agent for dispersing silver (Ag) particles of a few nanometer size (hereinafter called metal nano-particle) at the room temperature (hereinafter called nano-Ag paste). As to the nano-Ag paste, the dispersing agent is eliminated by heating, and the metal nano-particle is sintered by the particle effect and able to form a film having conductivity.

In the preferred embodiment of the present invention, paste NPS or NPS-HTB of Harima Kasei Co., Ltd. is employed as nano-Ag paste. Such nano-Ag paste is applied in a pattern on a substrate by a screen printing method with use of a previously patterned screen. And, in the case of paste NPS, heat treatment at 210°C to 230°C is performed for 60 min. as a drying/firing process. On the other hand, in the case of using paste NPS-HTB, after executing a drying process at 200°C to 240°C for 10 min., a firing process at 300°C to 350°C is performed for 30 min. to 60 min to achieve the forming purpose.

Besides the case of using the above-mentioned nano-Ag paste, it is allowable to form a metal single-layer film or metal multi-layer film such as chrome/copper/chrome and chrome/aluminum/chrome by using a vacuum film forming process such as a sputtering method. In this case, however, the temperature of glass substrate should be 410°C or lower. And, after forming such a thin film, a resist layer is formed, and pattern forming is executed by a photolithography method.

By using either a method of using nano-Ag paste or a method of using the vacuum film forming process in order to form metal bus electrodes 4b, 5b, it is possible to keep the compressive stress remaining in front glass substrate 3 at the level of initial value as maintained in the manufacture of the glass substrate.

Also, shielding layer 7 is similarly formed by screen-printing of a paste containing black pigment or by using photolithography method for patterning and firing after forming black pigment over the entire surface of the glass substrate. In this case, it is also necessary to keep the temperature of front glass substrate 3 at 410°C or lower.

Dielectric layer 8 is described in the following. To form dielectric layer 8, a dielectric paste layer is first formed by applying dielectric paste onto front glass substrate 3 by using a screen printing method or dye-coating method in such manner as to cover scan electrode 4, sustain electrode 5, and shielding layer 7. After that, it is left for a predetermined length of time so that the layer surface of dielectric paste applied is leveled, forming a flat surface.

In the prior art, the dielectric paste is a material for dielectric layer such as glass powder, a paint containing binder and solvent. And after the above-mentioned process, the glass powder is fired for vitrifying at 550°C to 600°C that is around the softening point temperature of the material for dielectric layer. However, the effect of the present invention cannot be obtained by this prior art because the compressive stress remaining in the glass substrate is reduced.

On the other hand, in the preferred embodiment of the present invention, the paste used is a paste adjusted by dispersing silica particles of about 50 wt% to 60 wt% into a mixed solution of a resin binder formed of oligomer having siloxane bond and a solvent such as methyl ethyl ketone or isopropyl alcohol. In this case, as the resin binder, Glasca of JSR Co., Ltd. is employed, and as the silica particles, IPA-ST of Nissan Chemical Co., Ltd. is employed.

The paste is applied by a dye-coating method on front glass substrate 3 in such manner as to cover scan electrode 4, sustain electrode 5, and shielding layer 7, and after drying at 100°C for 60 min., it is fired at 250°C to 350°C for 10 min. to 30 min. In the preferred embodiment of the present invention, the thickness of dielectric layer 8 after firing ranges from about 12µm to 15µm.

Also in the preferred embodiment of the present invention, it is also possible to form dielectric layer 8 by using a sol-gel method. The sol-gel method is a method such that a solution with metal alkoxide particles or the like dispersed in colloidal fashion is gelled losing fluidity through hydrolysis and polycondensation, and it is heated to form dielectric layer 8. In this case, to make dielectric layer 8 substantially containing no lead component, silicon oxide (SiO₂) film is formed by using tetraethoxysilane (TEOS) as the material.

Also, besides the above-mentioned sol-gel method, silicon oxide (SiO₂) film can be formed by a plasma CVD method, using tetraethoxysilane (TEOS) as the material. In this case, it is necessary to keep the temperature of front glass substrate 3 at 410°C or lower.

The method of forming protective layer 9 is described in the following. As the methods of forming protective layer 9, a screen printing method, sputtering method, electron beam evaporation method, ion plating method, and thermal CVD (chemical vapor-phase growth method) using organic metal material are available. At present, most widely employed is an electron beam evaporation method in which electron beam is applied to metal oxide pellets based on magnesium (Mg) that is the source of evaporation for the purpose of thermal evaporation, thereby forming a thin film of magnesium oxide (MgO) that is metal oxide based on magnesium (Mg) in an oxygen atmosphere. In the preferred embodiment of the present invention, protective layer 9 is formed by an electron beam evaporation method, and in that case, the substrate temperature of the glass substrate is 270°C to 350°C. The substrate temperature is properly adjusted in accordance with the film growth of magnesium oxide (MgO) and the oxygen atmosphere so that the temperature of front glass substrate 3 is 410°C or lower. By using such a method to form protective layer 9, it is possible to maintain the stress remaining in the glass substrate.

Magnesium oxide (MgO) that is the main component of protective layer 9 is excellent in adsorption of water and impure gas such as hydrogen carbonic or carbonic gas. Therefore, after forming protective layer 9, firing process is sometimes executed in order to eliminate such impure gas from protective layer 9. However, in the firing process, it is also necessary to keep the temperature of front glass substrate 3 in a temperature range of 410°C or lower.

Through the above-mentioned process, scan electrode 4, sustain electrode 5, shielding layer 7, dielectric layer 8, and protective layer 9 are formed on front glass substrate 3 as structurally predetermined, and thereby, front plate 2 which maintains the residual stress of front glass substrate 3 in the initial state can be completed.

On the other hand, rear plate 10 is formed as described in the following. Firstly, on rear glass substrate 11, a material layer that is a structure for address electrode 12 is formed by a method of screen-printing a paste containing silver (Ag) material or a method of patterning with use of photolithography method after forming a metal film over the entire surface, and it is fired at the desired temperature to form address electrode 12.

Subsequently, a dielectric paste layer is formed by applying dielectric paste onto rear glass substrate 11 formed with address electrode 12 by using a dye-coating method in such manner as to cover address electrode 12. After that, Primary dielectric layer 13 is formed by firing the dielectric paste layer. The dielectric paste is a paint containing a dielectric material such as glass powder, binder, and solvent.

And, a barrier rib forming paste containing the material for barrier ribs is applied onto Primary dielectric layer 13 and patterned to a predetermined shape to form a barrier rib material layer, which is then fired to form barrier rib 14. In this case, as a method of patterning the barrier rib forming paste applied onto Primary dielectric layer 13, a photolithography method or sand blast method can be employed. After that, a phosphor paste containing phosphor material is coated on Primary dielectric layer 13 between adjacent barrier ribs 14 and on the side surface of barrier rib 14, and it is fired to form phosphor layer 15. Through the above processes, rear plate 10 having a predetermined component member is completed on rear glass substrate 11.

In this way, front plate 2 and rear plate 10 provided with predetermined component members are arranged opposite each other so that scan electrode 4 is perpendicular to address electrode 12, which are then peripherally sealed, and after exhausting atmospheric air out of discharge space 16, discharge gas containing neon (Ne) or xenon (Xe) is sealed therein to complete PDP1.

The sealing and exhausting process is performed as described in the following. A sealing material is applied to the predetermined positions around front plate 2 or rear plate 10 before sealing, and the sealing material is dried for a specific length of time. After that, front plate 2 and rear plate 10 are arranged opposite each other so that display electrode 6 of front plate 2 intersects address electrode 12 of rear plate 10, and are fixed by fixing jigs or the like.

In the prior art, a paste-like sealing material prepared by kneading an organic solvent and a mixture of low-melting point crystallized frit glass and specified filler is used as the sealing material. And, it is fired at about 460°C to 550°C to harden the sealing material. However, in this prior art, the effect of the present invention cannot be obtained because the compressive stress remaining in the glass substrate is reduced.

On the other hand, in the preferred embodiment of the present invention, UV hardening material is used as the sealing material. Accordingly, it is possible to realize a low-temperature sealing/exhausting process which cannot be realized by using the prior art, and to maintain the stress remaining in the glass substrate. Specifically, UV hardening sealing agent TU7113 of JSR Co., Ltd. is employed as the sealing material. It is prepared as a paste, and the paste-like material is applied by using a coating device provided with a dispenser.

After that, front plate 2 and rear plate 10 are temporarily secured for press-fitting the sealing material, and then UV irradiation is executed on the area of sealing material, and the sealing material is hardened by heating at 150°C for 30 min. Thus, the sealing process is completed.

Subsequently, gas is exhausted out of PDP1. In order to promote the elimination of gas physically adsorbed in PDP1, the heating is maintained at about 200°C for about 60 min. After that, discharge gas containing neon (Ne) or xenon (Xe) is sealed into discharge space 16 with a predetermined pressure (for example, pressure of about 530hPa to 800hPa in the case of Ne - Xe mixed gas). Finally, portions such as exhaust pipes are hermetically sealed to complete the exhausting process.

As described above, in the preferred embodiment of the present invention, in any steps for the manufacture of PDP1 such as a step of forming display electrode 6, a step of forming dielectric layer 8, and a step of forming front plate 2 and rear plate 10 so as to be arranged opposite each other, at least the temperature of front glass substrate 3 of front plate 2 is lower by 100°C or over as compared with the strain point temperature of front glass substrate 3. Also, in this case, the temperature is allowable to be 470°C or lower and also allowable to be 410°C or lower depending upon the type of glass substrate.

Consequently, the residual stress at the surface where dielectric layer 8 of front glass substrate 3 of front plate 2 is not disposed can be kept in a range of 0.8MPa to 2.4MPa that is the residual stress in the initial state maintained in the manufacture of glass substrate. Further, when the thickness of front glass substrate 3 ranges from 2.8mm ±0.5mm, the residual stress is allowable to be in a range of 1.3MPa to 2.4MPa, and when the thickness of front glass substrate 3 ranges from1.8mm ±0.5mm, the residual stress is desirable to be in a range of 0.8MPa to 1.7MPa.

In this way, it is possible to maintain the compressive stress remaining in the glass substrate and to obtain very strong PDP1 which is free from panel breakage against external forces such shocks given during transportation.

### Exemplary Embodiment

The action and effect of PDP in the preferred embodiment of the present invention will be described in the following. Drop strength tests have been executed in order to confirm the effect in the preferred embodiment of the present invention. Specifically, PDP samples whose screen size is diagonally 42 inches are prepared, and they are packaged just the same as for delivery of products, and then, the sample is dropped from 50cm height with the image display surface down to check for breakage of the PDP sample in the package. The PDP samples tested are PDP samples manufactured by the method based on the prior art and PDP samples in the preferred embodiment of the present invention, 100 samples each. All the PDP samples in this exemplary embodiment is front glass substrate 3, using glass substrates of 1.8mm ±0.5mm in thickness.

As a result of the drop strength test, in the PDP sample manufactured by the method based on the prior art, breakage of front glass substrate 3 is generated in 6 samples out of 100 samples. On the other hand, in the PDP samples in the preferred embodiment of the present invention, there is no breakage of front glass substrate 3 in all the 100 samples.

And, with respect to PDP samples based on the prior art and PDP samples in the preferred embodiment of the present invention, 10 samples each, the residual stress in front glass substrate 3 is measured. As a result, as to front glass substrate 3 manufactured by the method based on the prior art, the residual stress is out of the proper range of 0.8MPa to 1.7MPa and almost no stress is generated. On the other hand, in the case of front glass substrate 3 manufactured by the method in the preferred embodiment of the present invention, the stress is generated within the above-mentioned range.

This is probably because, in the PDP manufacturing method in the preferred embodiment of the present invention, the front glass substrate 3 of PDP1 is manufactured at a temperature lower by 100°C as compared with the strain point temperature of the glass substrate, and therefore, the residual stress initially generated in front glass substrate 3 is almost maintained without reduction, enabling PDP1 to have a sufficient strength.

According to the present invention, since the heat process is executed at lower temperatures as compared with the prior art, it is effective to suppress the generation of heat cracking caused due to temperature gradient in the glass substrate in the firing furnace or the like.

In the preferred embodiment of the present invention described above, the set temperature of each heat process and its processing time are mentioned as examples, but the invention is not limited by this setting. The residual stress in the glass substrate can be kept at the residual stress in the initial state by manufacturing the PDP at a temperature lower by 100°C as compared with the strain point temperature of front glass substrate 3, and it is possible to obtain the effect of the present invention.

### INDUSTRIAL APPLICABILITY

As described above, the present invention is able to provide a PDP which has sufficient glass substrate strength and is less in generation of panel breakage, and it is useful for a display device with a large screen.

## Claims

1. A plasma display panel comprising:
a plurality of pairs of display electrodes and a dielectric layers disposed on a front glass substrate,
wherein a stress at an opposite side of a surface where the dielectric layer of the front glass substrate is disposed is a compressive stress ranging from 0.8MPa to 2.4MPa.

2. The plasma display panel of claim 1, wherein thickness of the front glass substrate is 2.8mm ±0.5mm, and the compressive stress ranges from 1.3MPa to 2.4MPa.

3. The plasma display panel of claim 1, wherein thickness of the front glass substrate is 1.8mm ±0.5mm, and the compressive stress ranges from 0.8MPa to 1.7MPa.

4. A method for manufacturing a plasma display panel comprising:
forming a front glass substrate formed with a display electrodes and a dielectric layer, and a rear glass substrate so as to be arranged opposite each other,
wherein the front glass substrate is processed at a heat treatment temperature lower by 100°C or over as compared with a strain point temperature of the front glass substrate in any of the steps, a step of forming the display electrode, a step of forming the dielectric layer, and a step of disposing the front glass substrate and the rear glass substrate so as to be arranged opposite each other.

5. The method for manufacturing a plasma display panel of claim 4, wherein the heat treatment temperature is 470°C or lower.

6. The method for manufacturing a plasma display panel of claim 4, wherein the heat treatment temperature is 410°C or lower.
